# EUROPEAN PATENT APPLICATION

(11) **EP 4 675 845 A1**
(43) Date of publication of application: **07.01.2026**
(21) Application number: 23924892.5
(22) Date of filing: 31.08.2023
(51) Int. Cl.: H01M 50/593, H01M 10/04

(54) **BATTERY CELL, BATTERY MODULE AND VEHICLE**

(30) Priority: 28.02.2023 CN 202320462069 U
(71) Applicant: BYD Company Limited, Shenzhen, Guangdong 518118 (CN)
(72) Inventor: DENG, Dongjun, Shenzhen, Guangdong 518118 (CN); WANG, Xinyue, Shenzhen, Guangdong 518118 (CN); ZHANG, Da, Shenzhen, Guangdong 518118 (CN); CHEN, Chong, Shenzhen, Guangdong 518118 (CN); WANG, Cuicui, Shenzhen, Guangdong 518118 (CN)
(74) Representative: Mathys & Squire
(86) International application number: PCT/CN2023/116270
(87) International publication number: WO 2024/178936

(57) **Abstract**

A battery cell (100), which is formed into a rectangular body. The battery cell (100) comprises: an electrode core (10), two insulating films (20) and adhesive members (30), wherein the electrode core (10) is provided with first surfaces (11) which are arranged opposite each other in the thickness direction, and second surfaces (12) which are arranged opposite each other in the width direction; the two insulating films (20) are bonded to the two first surfaces (11) respectively; and the adhesive members (30) are bonded to the second surfaces (12), and each adhesive member (30) has an overlapping area with each insulating film (20).

## Description

### CROSS-REFERENCE TO RELATED APPLICATIONS

The present application claims priority to Chinese Patent Application No. 202320462069.0, filed on February 28, 2023, and entitled "BATTERY CELL, BATTERY MODULE, AND VEHICLE", which is incorporated herein by reference in its entirety.

### FIELD

The present application relates to the field of batteries, in particular to a battery cell, a battery module and a vehicle.

### BACKGROUND

Among all forms of energy, electrical energy is easiest to use, cleanest, and most efficient energy source. Batteries are the best means to store electrical energy, which are widely used in people's daily lives and have significant impact on people's lives. With the gradual development of battery technology, batteries with good performance are increasingly sought after.

In related art, the battery insulating film is coated on the surface of an electrode core, which is complicated to fix, and the insulating film is not fitted and fixed to the electrode core, resulting in risks of wrinkling, edge flanging, etc.. The production efficiency is low, and there is room for improvement.

### SUMMARY

The present application aims to solve at least one of the technical problems existing in the related art. To this end, the present application proposes a battery cell capable of enhancing the stability of the insulating film and being favorable for improving production efficiency.

A battery cell which is formed as a rectangular body, the battery cell includes: an electrode core, the electrode core being arranged with first surfaces oppositely disposed in a thickness direction and second surfaces oppositely disposed in a width direction; two insulating films, the two insulating films being bonded to the two first surfaces respectively; an adhesive member, the adhesive member being glued to the second surface and having overlapping area with each of the insulating films.

The battery cell according to embodiments of the present application, wherein the insulating films are bonded to first surfaces of the electrode core so that the insulating films and the electrode core are fitted and fixed to avoid problems such as wrinkling or edge flanging of the insulating films. The adhesive member can be glued to the second surface of the electrode core, and the adhesive member and each of the insulating films have overlapping area so that the adhesive members can be glued to the two insulating films respectively to fix the insulating films to the first surfaces of the electrode core to enhance stability of the insulating films, and the manner of fixing the insulating films by the adhesive member is simpler, which is conducive to improving production efficiency.

According to some embodiments of the present application, each of the second surfaces is arranged with the adhesive member.

According to some embodiments of the battery cell of the present application, the adhesive member is located on outer side of the insulating film and is glued to the insulating films.

The battery cell according to some embodiments of the present application, wherein in the width direction, a width of the insulating films is W₁, a width of separators of the electrode core is W₂, and the battery cell satisfies the following relationship: (W₂-1) mm ≤ W₁ mm ≤ W₂mm.

The battery cell according to some embodiments of the present application, wherein the width of the overlapping area is not less than 2 mm in the width direction.

According to some embodiments of the battery cell of the present application, a thickness of the insulating films is in the range of 0.03 mm to 0.2 mm.

According to some embodiments of the present application, a length H of the battery cell takes a value of 400 mm ≤ H ≤ 1500 mm; a width W of the battery cell takes a value of 80 mm ≤ W≤ 240 mm; and a thickness T of the battery cell takes a value of 10 mm ≤ T≤ 40 mm.

A battery cell according to some embodiments of the present application, further comprising a housing body and cover plates, both ends of the housing body being arranged with the cover plates in length direction of the electrode core to define an accommodation cavity for placing the electrode core, and the cover plates are arranged with terminal poles, and tabs of the electrode core are electrically connected to terminal poles.

A battery cell according to some embodiments of the present application, wherein inner sides of the cover plates are arranged with spacers, the spacers are formed in ring shape and define isolating spaces, tabs are located in the isolating spaces, and the spacers are arranged with supporting portions which rest against the electrode core.

The present application also proposes a battery module.

A battery module according to an embodiment of the present application includes: a case; a plurality of battery cells which are the battery cells described in any of the above embodiments, and the plurality of battery cells are arranged within the case.

The present application also proposes a vehicle.

A vehicle according to an embodiment of the present application includes the battery module described in any of the above embodiments.

Advantages of the vehicle, battery module are the same as that of the battery cells described above with respect to related art, and will not be repeated here

Additional aspects and advantages of the present application will be set forth in part in the following description, and in part will be obvious from the following description, or may be learned through practice of the present application.

### BRIEF DESCRIPTION OF THE DRAWINGS

The above and/or additional aspects and advantages of the present application will become apparent and easily understood from the description of the embodiments in conjunction with the following drawings, in which:
FIG. 1 is a schematic diagram of a battery cell according to some embodiments of the present application;
FIG. 2 is an exploded view of the battery cell shown in FIG. 1;
FIG. 3 is a cross-sectional view in a width direction of the electrode core after the electrode core is mounted with insulating films and an adhesive member;
FIG. 4 is a schematic diagram of a vehicle according to some embodiments of the present application.

Reference Numerals:
vehicle 1000, battery cell 100, battery module 200, electrode core 10, tab 101, first surface 11, second surface 12, insulating film 20, adhesive member 30, case body 40, cover plate 50, terminal pole 51, spacer 60, supporting portion 61.

### DETAILED DESCRIPTION

Embodiments of the present application are described below in detail, and examples of said embodiments are illustrated in the accompanying drawings, wherein the same or similar signs throughout indicate to the same or similar components or components having the same or similar function. Embodiments described below by reference to the accompanying drawings are exemplary and merely serve to explain the present application and cannot be construed as a limitation on the present application.

The following disclosure provides many different embodiments or examples for implementing different structures of the present application. In order to simplify the disclosure of the present application, components and arrangements of specific example are described below. It will be appreciated that, they are merely examples, and are not intended to limit the present application. In addition, the present application may repeat reference numerals and/or letters in different examples. This repetition is for the purpose of simplicity and clarity and does not in itself dictate a relationship between the various embodiments and/or settings discussed. In addition, the present application provides examples of various specific processes and materials, but a person of ordinary skill in the art may recognize the applicability of other processes and/or the use of other materials.

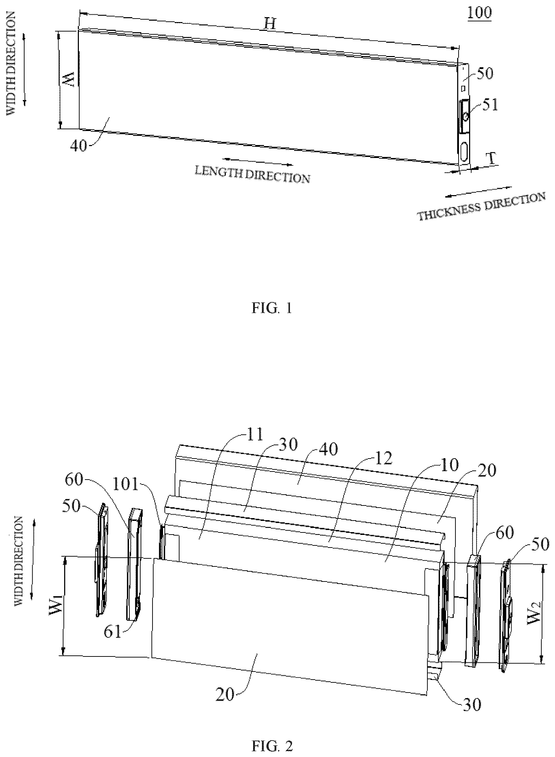

A battery cell 100 according to an embodiment of the present application is described below with reference to FIG. 1 to 4.

The battery cell 100 according to an embodiment of the present application, which is formed as a rectangular body, includes an electrode core 10, two insulating films 20, and an adhesive member30.

Specifically, the electrode core 10 is arranged with first surfaces 11 oppositely disposed in a thickness direction, to which two insulating films 20 are bonded, and second surfaces 12 oppositely disposed in a width direction, to which the adhesive member 30 is glued, and the adhesive member 30 has an overlapping area with each insulating films 20.

It should be noted that the width direction, thickness direction, length direction, and the like of the electrode core 10 are same as those of the battery cell 100 illustrated in FIG. 1.

Thus, one insulating film 20 can be arranged on two first surfaces 11, respectively, and two insulating films 20 are bonded to two first surfaces 11 of electrode core 10, respectively. Thus, connection stability can be conveniently enhanced between the electrode core 10 and the insulating films 20, and difficulty of assembly is reduced.

It should be noted that in the related art, battery insulating film is only coated on surface of the electrode core, and other structures are needed to fix the battery insulating film. The manner of fixing the battery insulating film is complicated, and if the battery insulating film is not fitted and fixed to the electrode core, there is risk of wrinkling, edge flanging, and the like, and production efficiency is low.

Therefore, in the present application, the insulating film 20 can be fitted and fixed to the two first surfaces 11 of the electrode core 10 by bonding the insulating films 20 to the two first surfaces 11 of the electrode core 10, which makes the manner of fixing the insulating films 20 simpler, and problems such as wrinkling or edge flanging of the insulating films 20 can be reduced, which is conducive to improving production efficiency.

Wherein, the insulating films 20 may be a thermal composite film, for example, the insulating films 20 may be made of PP/PE/PET or other polyolefin films, and the insulating films 20 are thermally bonded to the electrode core 10 to ensure that the insulating film 20 can be better fitted to the first surfaces 11 of the electrode core 10, which is beneficial to enhance connection stability between the insulating films 20 and the electrode core 10.

It will be appreciated that, type of the insulating films 20, bonding method, and the like described above are given by way of example and do not represent limitation thereto.

Further, an adhesive member 30 is arranged on the second surface 12, which has overlapping areas with each of the two insulating films 20, that is, at least part of the adhesive member 30 is bonded to the insulating films 20, so that fixing of the insulating films 20 can be achieved by the adhesive member 30, and the insulating films 20 can be fixed to the first surfaces 11 of the electrode core 10 to enhance the stability of the insulating films 20, and fixing manner of the insulating films 20 by the adhesive member 30 is simpler, which is advantageous for improving production efficiency.

Wherein, it should be noted that the adhesive member 30 and the insulating film 20 have an overlapping area, including but not limited to the adhesive member 30 being bonded to outer side of insulating films 20, or adhesive member 30 being bonded to inner side of insulating films 20.

At the same time, the adhesive member 30 arranged on the second surface 12 can also have a certain insulating effect on the battery cell 10, thereby avoiding the problem of insulation failure of the electrode core 10, and the adhesive member 30 and the insulating films 20 have an overlapping area, so that the insulating films 20 and the adhesive member 30 can jointly realize the coating of the electrode core 10, and the problem of insulation failure of the electrode core 10 at the connection of the insulating films 20 and the adhesive member 30 can be avoided.

For example, the electrode core 10 has a square structure, as the electrode core 10 is a blade-like electrode core, and as shown in FIG. 2, the first surfaces 11 are side surfaces in the thickness direction of the electrode core 10 and the second surfaces 12 are side surfaces in the width direction of the electrode core 10, wherein the first surfaces 11 are surfaces with the largest area of the electrode core 10. In this way, the insulating films 20 are mounted on the large surface of the electrode core 10 to function as insulation on the large surface of the cell to avoid an insulation failure problem of the electrode core 10.

Wherein, the insulating films 20 may be thermal composite films, for example, the insulating films 20 may be PP/PE/PET or another polyolefin films, and the insulating films 20 are thermally bonded to the electrode core 10 to ensure that the insulating films 20 can be better fitted to the first surfaces 11 of the electrode core 10, which is conducive to enhancing connection stability between the insulating films 20 and the electrode core 10.

It will be appreciated that, shape of the electrode core 10 and positions of first surfaces 11 and second surfaces 12 described above are for illustration only and do not represent limitation thereof.

In actual assembly, two insulating films 20 may be first bonded to the large surfaces of the electrode core 10, the adhesive member 30 is then glued to the second surfaces 12 of the electrode core 10, and then at least part of the adhesive member 30 overlaps the insulating films 20 on the two large surfaces of the electrode core 10 that is facing away from the electrode core 10. Since the adhesive member 30 has an adhesive effect, the part of the adhesive member 30 overlapping the insulating films 20 is adhesively connected to the insulating films 20.

In this way, fixing of insulating films 20 can be achieved by adhesive member 30, so that the insulating films 20 are fixed to the first surfaces 11 of the electrode core 10 to enhance stability of insulating films 20, and fixing of insulating films 20 by adhesive member 30 is simpler, which is conducive to improving production efficiency.

It should be noted that adhesive is arranged on a surface of the side where the adhesive member 30 cooperates with the electrode core 10 or the insulating films 20, for example, the adhesive member 30 may be configured as insulating tape or the like, or the adhesive member 30 can also be adhesively connected to the electrode core 10 and the insulating films 20 by applying adhesive, which is not limited herein.

The battery cell 100 according to an embodiment of the present application, wherein the insulating films 20 thereof are bonded to the first surfaces 11 of the electrode core 10 so that the insulating films 20 are fitted and fixed to the electrode core 10 to avoid problems such as wrinkling or edge flanging of the insulating films 20. The adhesive member 30 can be bonded to the second surface 12 of the electrode core 10, and the adhesive member 30 and each of the insulating films 20 have overlapping area so that the adhesive member 30 can be bonded to the two insulating films 20, respectively, to fix the insulating films 20 to the first surfaces 11 of the electrode core 10, to enhance stability of the insulating film 20, and the manner of fixing the insulating film 20 by the adhesive member 30 is simpler, which is favorable to improving production efficiency.

In some embodiments, each second surface 12 is arranged with the adhesive member 30.

Thus, by arranging the adhesive member 30 on both of the second connection surfaces, so as to bond the adhesives members 30 on the two second surfaces 12 to the two sides of the width direction of the two insulating films 20 respectively, thereby achieving fixing of the insulating films 20 on both sides in width direction of the insulating films 20 to enhance stability of the insulating films 20.

In some embodiments, the adhesive member 30 is located on outer side of insulating films 20 and glued to the insulating films 20.

Thus, difficulty of bonding the insulating films 20 to the electrode core 10 is reduced, and problems such as wrinkling or edge flanging of the insulating films 20 are avoided.

For example, in actual assembly, the insulating films 20 may be bonded to the first surfaces 11 of the electrode core 10 before the adhesive member 30 is bonded to the second surface 12 of the electrode core 10, and the adhesive member 30 is bonded to outer side of the insulating films 20 (the side of insulating films 20 facing away from the first surface 11 of the electrode core 10).

In this way, the adhesive member 30 can be adhesively fixed to the insulating films 20 on an outer side of the insulating films 20, thereby avoiding problems such as wrinkling or edge flanging of the insulating films 20, and facilitating improving assembly efficiency of the insulating films 20 and the electrode core 10.

In some embodiments, as illustrated in FIG. 2, in a width direction, a width of the insulating films 20 is W₁, a width of a separator of the electrode core 10 is W₂, and a battery cell 100 satisfies following relationship: (W₂-1) mm ≤ W₁ mm ≤ W₂ mm.

It should be noted that separators of the electrode core 10 are located at first surfaces 11 of the electrode core 10, a width of the separators of the electrode core 10 is the same as the width of the electrode core 10, and width W₁ of the insulating films 20 and width W₂ of the separators of the electrode core 10 are each in mm.

Thus, the width of the insulating films 20 is made to not exceed the width of the separators of the electrode core 10, avoiding that the width of the insulating films 20 is too large to cause bulges to occur on both sides in the width direction of the electrode core 10, and it is convenient to subsequently mount the electrode core 10 in the case body 40.

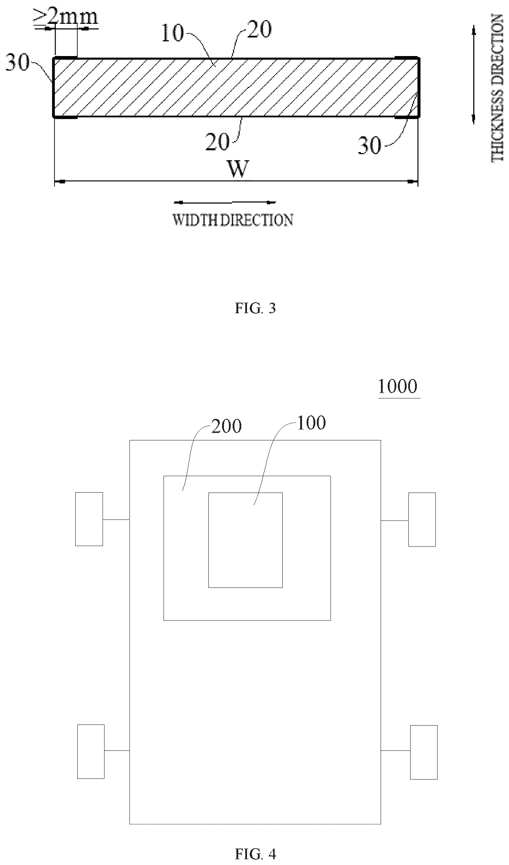

In some embodiments, in the width direction, as shown in FIG. 3, the width of overlapping area is not less than 2 mm.

Thus, connection stability between the adhesive member 30 and the insulating films 20 can be ensured, avoiding detachment of the adhesive member 30 and the insulating films 20, and it can be ensured that the adhesive member 30 and the insulating films 20 can fully play an insulating role on the first surfaces 11 of the electrode core 10.

In some embodiments, the thickness of the insulating films 20 ranges from 0.03 mm to 0.2 mm.

Thus, the thickness of the insulating films 20 can be made smaller while ensuring optimal insulating effect of the insulating films 20, thereby reducing influence of arranging the insulating films 20 on size of the electrode core 10, which is conducive to miniaturization design of the battery cell 100.

For example, the insulating films 20 have a thickness of 0.05 mm, or the insulating films 20 have a thickness of 0.1 mm, alternatively, the thickness of the insulating film 20 is 0.12 mm. That is, when the thickness of the insulating films 20 is taken within the above-described value range, the thickness of the insulating films 20 can be made smaller while ensuring the best insulating effect of the insulating films 20, thereby reducing influence of arranging the insulating films 20 on size of the electrode core 10, which is conducive to miniaturization design of the battery cell 100.

In some embodiments, the length H of the battery cell 100 takes a value of 400 mm ≤ H ≤ 1500 mm; the width W of the battery cell 100 takes a value of 80 mm ≤ W ≤ 240 mm; the thickness T of the battery cell 100 takes a value of 10 mm ≤ T ≤ 40 mm.

For example, the battery cell 100 is configured as a blade-like battery, and length H of the battery cell 100 is 500 mm, width W of the battery cell 100 is 100 mm, thickness T of the battery cell 100 is 10 mm, or length H of the battery cell 100 is 600 mm, width W of the battery cell 100 is 200 mm, thickness T of the battery cell 100 is 20 mm, or length H of the battery cell 100 is 1000 mm, width W of the battery cell 100 is 160 mm, the thickness T of the battery cell 100 is 36 mm.

That is, when length H of the battery cell 100, width W of the battery cell 100, and thickness T of the battery cell 100 are taken within above-described value ranges, sufficient energy density of battery cell 100 can be ensured, and dimensions of battery cell 100 can be controlled, which facilitates batch production.

In some embodiments, as shown in FIGS. 1 and 2, the battery cell 100 further includes a housing body 40 and cover plates 50.

In the length direction of the electrode core 10, both ends of the case body 40 are arranged with cover plates 50 to define an accommodation cavity for placing the electrode core 10, and cover plates 50 are arranged with terminal poles 51 to which tabs 101 of the electrode core 10 is electrically connected.

Thereby, the electrode core 10 can be installed into the housing body 40, two cover plates 50 may be respectively mounted to both ends of the case body 40 in length direction and block the accommodation chamber at both ends thereof, so as to protect the electrode core 10 by the case body 40 and the cover plates 50. on the one hand, electrical connection to the tabs 101 of the electrode core 10 through the terminal poles 51 of the cover plates 50 is facilitated, so that electrical connection to other structures of the electrode core 10 can be achieved through the poles 51 to realize charging and discharging of the electrode core 10, and on the other hand, the cover plates 50 are able to close off the accommodation cavity to enhance sealing of the accommodation cavity to protect the electrode core 10, facilitating prolonging of the service life of the electrode core 10.

Further, inner side of the cover plates 50 is arranged with spacers 60, which are formed in shape of ring and define insulating space in which the tabs 101 are located, and which are arranged with supporting portions 61 which rest against the electrode core 10.

The above-mentioned "inner side of the cover plates 50" refers to the side of the cover plates 50 facing the electrode core 10, that is, the spacers 60 are arranged between the end of the electrode core 10 in length direction and the corresponding cover plate 50, and the supporting portions 61 of the spacer 60 can rest against the electrode core 10 to separate the electrode core 10 from cover body, and can play a role to support the electrode core 10 to enhance the structural stability of the electrode core 10. At the same time, the tabs 101 of the electrode core 10 can be electrically connected to the terminal poles 51 of the cover plate 50 through the isolation spaces.

It is noted that spacers 60 may be a separate structure or spacers 60 are integrally formed with the cover plates 50.

As shown in FIG. 2, spacers 60 are separate structural component, and at time of actual assembly, the electrode core 10 is first installed in the case body 40, then spacers 60 are installed at each end of electrode core 10 in length direction, and spacers 60 are located in the accommodation cavity of the case body 40, and then cover plates 50 are installed on side of spacers 60 facing away from the electrode core 10.

Thus, by the supporting portions 61 of two spacers 60, the electrode core 10 can be supported at both ends in length direction of the electrode core 10 to enhance structural stability thereof, and supporting portions 61 can space both ends in length direction of electrode core 10 from the cover plates 50 to realize insulation between the electrode core 10 and the cover plates 50.

Meanwhile, an isolation space is arranged on the spacer 60, interference of the tabs 101 of the electrode core 10 with the spacer 60 can be avoided, thereby ensuring that the tabs 101 of the electrode core 10 can pass through the isolation space of the spacer 60 to be electrically connected to the terminal poles 51 of the cover plates 50, and the supporting portion 61 can space the tabs 101 from the case body 40 on the outer side of the tabs 101 to be insulated when the tabs 101 and the terminal poles 51 are connected, so as to avoid problems of electrical leakage.

It will be appreciated that, the spacers 60 may also be arranged inside of the cover plates 50 and integrally formed with cover plates 50, thus the cover plate50 integrated with the spacers 60 may be directly installed at both ends of the electrode core 10 in length direction at time of installation, so as to simplify assembly step and to improve assembly efficiency.

The present application also proposes a battery module 200.

The battery module 200 according to an embodiment of the present application, includes a case and a plurality of battery cells 100.

The battery module 200 according to an embodiment of the present application, wherein the battery cell 100 is a battery cell 100 according to any of the embodiments described above, a plurality of battery cells 100 are arranged in the case.

For example, the battery module 200 may be arranged with a case, which may be configured in a square structure, with an installation cavity formed within the case, and plurality of battery cells 100 that are each installed within the installation cavity, and plurality of battery cells 100 may be arranged in sequence or spaced apart, and plurality of battery cells 100 may be arranged to synchronous charging and discharging so that battery module may operate stably.

The battery module 200 according to an embodiment of the present application, the insulating films 20 of the battery cell 100 thereof is bonded to the first surfaces 11 of the electrode core 10, such that the insulating films 20 are fitted and fixed to the electrode core 10, avoiding problems such as wrinkling or edge flanging of the insulating films 20. The adhesive member 30 can be bonded to the second surface 12 of the electrode core 10, and the adhesive member 30 and each of the insulating films 20 have overlapping areas so that the adhesive member 30 can be bonded to the two insulating films 20, respectively, so as to fix the insulating films 20 to the first surfaces 11 of the electrode core 10 to enhance stability of the insulating films 20, and the manner of fixing the insulating films 20 by the adhesive member 30 is simpler, which is conducive to improving production efficiency.

The present application also proposes a vehicle 1000.

As shown in FIG. 4, a vehicle 1000 according to an embodiment of the present application, includes a battery module 200 according to any of the embodiments described above.

A vehicle 1000 according to an embodiment of the present application, and the insulating films 20 of the battery cell 100 is bonded to the first surfaces 11 of the electrode core 10, such that the insulating films 20 are fitted and fixed to the electrode core 10, avoiding problems such as wrinkling or edge flanging of the insulating films 20, the adhesive member 30 can be adhered to the second surface 12 of the electrode core 10, and the adhesive member 30 and each of the insulating films 20 have overlapping areas so that the adhesive member 30 can be bonded to the two insulating films 20, respectively, so as to fix the insulating films 20 to the first surfaces 11 of the electrode core 10 to enhance stability of the insulating film 20, and the manner of fixing the insulating film 20 by the adhesive member 30 is simpler, which is conducive to improving production efficiency.

In the description of the present application, it will be understood that terms "central", "longitudinal", "lateral", "length", "width", "thickness", "up", "down" "front", "back", "left", "right", "vertical", "horizontal", "top", "bottom", "inner", "outer", "clockwise", "counterclockwise", "axial", "radial", "circumferential" and the like indicate an orientation or positional relationship based on the orientations or positional relationships shown in the accompanying drawings, and are merely for convenience of describing the present application and simplifying the description, and do not indicate or imply that the device or element referred to must have a specific orientation, be constructed and operated in a specific orientation, and therefore should not be understood as limitation on the present application.

In addition, the terms "first", "second" are used merely for purposes of descriptive, and cannot be understood as indicating or implying relative importance or implying a quantity of technical features indicated. Thus, a feature restricted by "first" or "second" may explicitly or implicitly includes one or more of that features. In the description of the present application, "plurality" means two or more than two, unless explicitly specified.

In the present application, unless otherwise explicitly specified and limited, the terms "mount", "connect", "connection", and "fix" will be understood in a broad sense. For example, a connection may be a fixed connection, a detachable connection, or an integral connection; or the connection may be a mechanical connection or an electrical connection or communicatively; or the connection may be a direct connection, an indirect connection through an intermediary, or internal communication between two elements or mutual action relationship between two elements. A person of ordinary skill in the art can understand specific meanings of the terms in the present application based on specific situations.

In the present application, unless otherwise explicitly specified and limited, a first feature being "on" or "under" a second feature may be that the first and second features are in direct contact, or the first and second features are in indirect contact through an intermediary. A first feature being "above", "over", or "on" a second feature can be the first feature being over or obliquely above the second feature, or merely means a first feature being at a higher level than the second feature. A first feature being "below", "under", or "beneath" a second feature may be the first feature under or obliquely below the second feature, or simply means the first feature being at a low level than the second feature.

In the description of the present specification, reference terms "an embodiment", "some embodiments", "an example," "a specific example," or "some examples" and the like means that specific features, structures, materials, or characteristics described in combination with the embodiment(s) or example(s) are included in at least one embodiment or example of the present application. In this specification, exemplary descriptions of the foregoing terms do not necessarily refer to the same embodiment or example. And the described specific features, structures, materials, or characteristics may be combined in a proper manner in any one or more of the embodiments or examples. In addition, different embodiments or examples and features of different embodiments or examples described in this specification may be combined by a person of ordinary skill in the art without contradiction.

Although embodiments of the present application have been shown and described, it can be understood by a person of ordinary skill in the art that many changes, modifications, replacements and variations may be made to these embodiments without departing from the principles and spirit of the application, and the scope of the present application defined by the claims and their equivalents.

## Claims

1. A battery cell (100), wherein the battery cell (100) being formed as a rectangular body, the battery cell (100) comprising:
an electrode core (10), the electrode core being arranged with first surfaces (11) oppositely disposed in a thickness direction and second surfaces (12) oppositely disposed in a width direction;
two insulating films (20), the two insulating films (20) being bonded to the two first surfaces (11) respectively;
an adhesive member (30), the adhesive member (30) being glued to the second surface (12) and having overlapping areas with each of the insulating films (20).

2. The battery cell (100) according to claim 1, wherein each of the second surfaces (12) being arranged with the adhesive member (30).

3. The battery cell according to any one of claims 1 to 2, wherein the adhesive member (30) being located on outer side of the insulating films (20) and glued to the insulating films (20).

4. The battery cell (100) according to any one of claims 1 to 3, wherein, in width direction, width of the insulating films (20) is W₁, width of separators of the electrode core (10) is W₂, and the battery cell (100) satisfies the following relationship: (W₂-1) mm ≤ W₁ mm ≤ W₂mm.

5. The battery cell (100) according to any one of claims 1 to 4, wherein width of the overlapping area in width direction is not less than 2 mm.

6. The battery cell (100) according to any one of claims 1 to 5, wherein thickness of the insulating films (20) is in range of 0.03 to 0.2 mm.

7. The battery cell (100) according to any one of claims 1 to 6, wherein length H of the battery cell (100) takes a value of 400 mm ≤ H ≤1500 mm;
width W of the battery cell (100) takes a value of 80 mm ≤ W ≤ 240 mm;
thickness T of the battery cell (100) takes a value of 10 mm ≤ T ≤ 40 mm.

8. The battery cell (100) according to any one of claims 1 to 7, further comprising a housing body (40) and cover plates (50), both ends of the housing body (40) are arranged with the cover plates (50) in length direction of the electrode core (10) to define an accommodation cavity for placing the electrode core (10), and the cover plates (50) are arranged with terminal poles (51) , tabs (101) of the electrode core (10) are electrically connected to terminal poles (51).

9. The battery cell (100) according to claim 8, wherein inner sides of the cover plates (50) are provided with spacers (60) , the spacers (60) being formed in ring shape and defining isolating spaces, tabs (101) are located in the isolating spaces, and the spacers (60) are arranged with supporting portions (61) which rest against the electrode core (10).

10. A battery module (200) comprising:
a case;
a plurality of battery cells (100), the battery cells (100) being according to any one of claims 1 to 9, and the plurality of battery cells (100) being arranged within the case.

11. A vehicle (1000) comprising a battery module (200) according to claim 10.
